# EUROPÄISCHE PATENTANMELDUNG

(11) **EP 0 535 303 A1**
(43) Veröffentlichungstag der Anmeldung: **07.04.1993**
(21) Anmeldenummer: 92108372.1
(22) Anmeldetag: 18.05.1992
(51) Int. Cl.: H02K 15/04

(54) **Vorrichtung zum Wickeln von Spulen für elektrische Maschinen**

(30) Priorität: 04.10.1991 DE 4132953
(71) Anmelder: STATOMAT SPEZIALMASCHINEN GMBH, D-61138 Niederdorfelden (DE)
(72) Erfinder: Sadiku, Sadik, W-6457 Maintal 1 (DE)
(74) Vertreter: Jochem, Bernd, Dipl.-Wirtsch.-Ing.

(57) **Zusammenfassung**

Die Vorrichtung zum Wickeln von Spulen oder Spulengruppen für elektrische Maschinen besteht in bekannter Weise aus einer Wickelschablone (10), einem Aufnehmer (16), einer relativ zur Schablone umlaufenden Wickeldüse (12), einem Abstreifer (14), einer Schneideinrichtung sowie einer Längenzieheinrichtung mit einem Greifer (18). Um zwischen verschiedenen Wickel-aufgaben Umrüstarbeiten zu vermeiden und die Flexibilität der Vorrichtung zu verbessern, ist vorgesehen, daß der Greifer (18) mit der Schneideinrichtung verbunden ist und diese Einheit von einer Stellung auf einer Seite der Schablone (10) auf deren entgegengesetzte Seite verfahrbar ist.

## Beschreibung

Die Erfindung betrifft eine Vorrichtung zum Wickeln von Spulen oder Spulengruppen für elektrische Maschinen nach dem Oberbegriff des Patentanspruchs 1.

Eine derartige Vorrichtung ist z. B. in der DE-A1-30 24 219 beschrieben. Dort sind auch noch weitere ähnliche Vorrichtungen erwähnt. Ihnen allen ist gemeinsam, daß eine sogenannte Längenzieheinrichtung mit einem Greifer zum wahlweise losen Führen oder Festklemmen des Wickeldrahtes vor, nach und zwischen nacheinander ausgeführten Wickelvorgängen, insbesondere zur Erzeugung von Zwischenpolverbindungen, bei der Herstellung bestimmter Wicklungen in einer jeweils zugeordneten bestimmten Stellung neben der Schablone fest angebracht ist, so daß der zwei- oder dreidimensional bewegbare Greifer zwar eine Vielzahl vorbestimmter Stellungen anfahren kann, diese aber im wesentlichen immer nur auf der einen Seite, nicht auch auf der gegenüberliegenden Seite der Schablone liegen. Da sich jedoch die zweckmäßigen oder notwendigen Arbeitsstellungen des Greifers nach der Wickelaufgabe richten und mal auf der einen, ein ander Mal auf der gegenüberliegenden Seite der Schablone liegen, wie beispielsweise bei Umkehr der Wickel- und Indexierrichtung des Aufnehmers, haben die bekannten Vorrichtungen den Nachteil, daß die Längenzieheinrichtung bei Änderungen der Wickelaufgabe häufig abgebaut und an anderer Stelle neben der Schablone wieder montiert und einjustiert werden muß. Das Umrüsten wird noch dadurch kompliziert, daß auch eine Schneideinrichtung, mittels welcher der Wickeldraht nach dem Wickeln einer bestimmten Anzahl Spulen oder Spulengruppen abgeschnitten wird, je nach Wickelaufgabe versetzt werden muß. Schließlich kann man mit den bekannten Vorrichtungen auch nicht Drahtenden bestimmter Länge an bestimmten Stellen neben dem Aufnehmer festlegen, so daß sie bei der weiteren Bearbeitung zuverlässig maschinell erfaßt werden können. Der Erfindung liegt deshalb die Aufgabe zugrunde, eine Vorrichtung der eingangs genannten Art zu schaffen, bei welcher die Umrüstzeiten entfallen, Nebenzeiten verkürzt werden können und größtmögliche Flexibilität bei der Anpassung an unterschiedliche Wickelaufgaben erreicht wird.

Vorstehende Aufgabe wird erfindungsgemäß dadurch gelöst, daß die Schneideinrichtung neben dem Greifer an dessen Träger gelagert und die aus dem Greifer und der Schneideinrichtung bestehende Einheit durch eine steuerbare Bewegung des Trägers von einer Stellung auf einer Seite der Schablone zu einer Stellung auf der entgegengesetzten Seite der Schablone verfahrbar ist.

Die neue Vorrichtung bietet den Vorteil, daß Änderungen der Wickelparameter, z. B. der Schablonenform und/oder -weite, der Umlaufbahn der Wickeldüse, der Wickelrichtung und der Indexierrichtung des Aufnehmers keine komplizierten und langwierigen Umrüstarbeiten an der Längenzieheinrichtung und der Schneideinrichtung mehr verursachen. Es braucht dem Greifer lediglich ein anderes Bewegungsprogramm vorgegeben zu werden. Er kann sogar innerhalb einer Phase von der einen auf die entgegengesetzte Seite der Schablone gebracht und beim Indexieren mitbewegt werden. Nachdem eine oder mehrere Spulen fertiggewickelt worden sind, kann der Greifer den Wickeldraht zwischen der Wickeldüse und der Schablone genauso erfassen wie bei der Bildung von Zwischenpolverbindungen, und nachdem mittels des Greifers noch das Drahtende in gewünschter Länge aus der Wickeldüse gezogen worden ist, kann unmittelbar neben den Klemmflächen des Greifers der Wickeldraht durchtrennt werden und, falls gewünscht, an einer bestimmten Stelle neben dem Aufnehmer abgelegt und ggf. fixiert werden.

In praktischer Ausführung wird eine Konstruktion bevorzugt, bei welcher der Träger längs eines Kreisbogens um die Schablone verfahrbar ist. Alternativ bestünde daneben die Möglichkeit, den Träger entlang rechtwinklig aufeinander stehender Koordinaten, z. B. längs einer etwa U-förmigen Bahn, auf die entgegengesetzte Seite der Schablone zu verfahren. Im letzteren Fall ist jedoch die Steuerung komplizierter, vor allem dann, wenn der Greifer beim Indexieren des Aufnehmers mitdrehen soll.

Eine besonders einfache Halterung für den Greifer ergibt sich dadurch, daß er an einem Schlitten montiert ist, welcher um eine sich parallel zur Drehachse der Wickeldüse erstreckende Achse drehbar gelagert und um eine zu seiner Drehachse senkrecht liegende Achse kippbar und quer zu dieser Kippachse verschiebbar ist, wobei die Dreh- und Kippbewegungen sowie die Verschiebebewegung durch eine Steuervorrichtung zu steuern sind.

Der Greifer selbst hat zweckmäßigerweise zwei Klemmbacken, welche einlaßseitig mit gegeneinander weisenden, aber versetzt angeordneten Vorsprüngen ausgebildet sind. Er kann damit drei Stellungen einnehmen, nämlich eine ganz geöffnete Stellung, in welcher der Wickeldraht zwischen den Vorsprüngen hindurch in den Greifer eingeführt werden kann, eine Zwischenstellung, in welcher sich die Vorsprünge teilweise überlappen, so daß der Draht im Greifer gefangen, aber nur lose geführt ist, und schließlich eine Klemmstellung, in welcher der Draht zwischen den zusammengedrückten Klemmbacken festgehalten wird.

Die mit dem Greifer verbundene Schneideinrichtung wird vorzugsweise in der Form realisiert, daß neben den Klemmbacken Schneidkanten angebracht sind, welche in der Klemmstellung aus einer unwirksamen, zurückgezogenen oder abgedeckten Lage in eine schneidend zusammenwirkende Stellung bewegbar sind. Dies kann mittels eines besonderen Antriebs für die Schneidkanten geschehen, der die bereits durch den Antrieb der Klemmbacken bei der Klemmbewegung angenäherten Schneidkanten zum Schneideingriff zusammenführt, indem er eine oder beide Schneidkanten bewegt. Alternativ kann aber auch ein einziger Antrieb für die Klemmbewegung und die Schneidbewegung vorhanden sein, indem dieser die Relativbewegung der Schneidkanten bewirkt und bei ihrer Annäherung die Klemmbacken über elastische Zwischenglieder voreilend mitnimmt.

Ein Ausführungsbeispiel der Erfindung wird nachstehend anhand der Zeichnung näher erläutert. Es zeigen:
- Fig. 1: eine vereinfachte Seitenansicht einer Vorrichtung zum Wickeln von Spulen für elektrische Maschinen mit einer eine Einheit bildenden Längenzieh- und Schneideinrichtung;
- Fig. 2: eine schematische Draufsicht auf die Vorrichtung nach Fig. 1, wobei die kombinierte Längenzieh- und Schneideinrichtung in mehreren, alternativ einzunehmenden Stellungen gezeigt ist;
- Fig. 3: eine vereinfachte Seitenansicht der Klemmbacken des Greifers der Längenzieheinrichrichtung;
- Fig. 4, 5, 6: Draufsichten auf den Greifer nach Fig. 3 in der geöffneten Stellung, einer zum losen Führen des Drahtes geeigneten Zwischenstellung in der geklemmten Stellung, in welcher der Draht auch geschnitten werden kann.

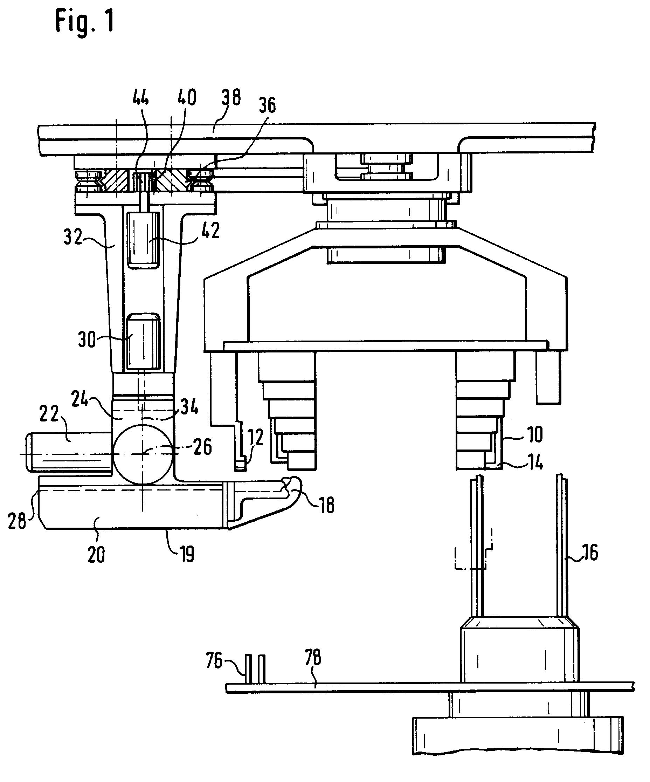

Die in Fig. 1 dargestellte Wickelvorrichtung hat den üblichen Aufbau, wie er z. B. auch in der DE-A1-28 08 048 und der DE-A1-30 24 219 gezeigt und beschrieben ist. Sie besteht aus einer undrehbar, aber axial verschieblich geführten Schablone 10, auf welche mittels einer umlaufenden Wickeldüse 12 Spulen gewickelt werden. Die Spulen werden durch angedeutete Abstreifer 14 von der Schablone 10 nach unten abgestreift und von einem aus einem Kranz von Stäben bestehenden Aufnehmer 16 aufgenommen. Im Beispielsfall werden auf eine mit mehreren Stufen bzw. Kammern ausgebildete Schablone 10 eine entsprechende Anzahl konzentrischer Spulen ohne Drahtunterbrechung hintereinander gewickelt und im Aufnehmer 16 abgelegt. Anschließend wird der Aufnehmer 16 z. B. um 90° gedreht, und es wird, ohne daß der Draht unterbrochen worden ist, die nächste Gruppe konzentrischer Spulen auf der Schablone 10 erzeugt und wiederum auf den Aufnehmer 16 übertragen. Dieser Vorgang wiederholt sich noch zweimal, so daß am Ende im Aufnehmer 16, jeweils um 90° versetzt, vier Gruppen konzentrischer Spulen hängen. Die Drahtverbindungen zwischen benachbarten Spulengruppen werden als Zwischenpolverbindungen bezeichnet. Ihre Länge hängt außer von den Maßen des Statorblechpaketes und der Spulen auch von der Wickelrichtung aufeinander folgender Spulen und der Richtung der Drehschaltbewegung des Aufnehmers 16 ab. Bei diesem kann es sich um ein Einziehwerkzeug handeln, mit dessen Hilfe die Spulen unmittelbar in ein Statorblechpaket einzuziehen sind, oder um ein Übertragungswerkzeug, mit welchem die Spulen auf ein Einziehwerkzeug übertragen werden.

Da der Wickel- und Abstreifvorgang in allen Einzelheiten bekannt ist, braucht darauf nicht näher eingegangen zu werden. Es sei nur erwähnt, daß in üblicher Weise während des Wickelns einer konzentrischen Spulengruppe die Wickeldüse 12 in einer gleichbleibenden Wickelebene dicht oberhalb der freien Enden des Aufnehmers 16 umläuft, während die Schablone 10 jeweils nach der Erzeugung einer bestimmten Anzahl Drahtwindungen auf einer Stufe mit dieser Stufe vollständig in den Aufnehmer 16 abgesenkt wird. Während des Wickelns auf eine bestimmte Stufe streifen die oszillierenden Abstreifer 14 die meisten Drahtwindungen von der Schablone 10 ab, so daß sie zwischen die Stäbe des Aufnehmers 16 fallen. Um nach dem Wickeln auf die oberste, größte Schablonenstufe auch noch die restlichen Drahtwindungen von der Schablone 10 abzustreifen, führen die Abstreifer 14 nach dem Anhalten der Wickeldüse 12 zusammen mit dieser und der Schablone 10 einen verhältnismäßig kleinen Hub nach unten bis unterhalb der freien Enden der Stäbe des Aufnehmers 16 aus, und während sie auf diesem unteren Niveau verharren oder von dort aus zunächst noch weiter abgesenkt und dann wieder hochgezogen werden, wird die Schablone 10 nach oben in die Ausgangsstellung zurückgezogen, in welcher sich die unterste, kleinste Schablonenstufe wieder zum größten Teil oberhalb des Aufnehmers 16 befindet. Die Wickeldüse 12 macht den genannten Hub der Abstreifer 14 nach unten mit und kehrt nach dem Herausziehen der Schablone 10 aus dem Aufnehmer 16 gleichzeitig mit dem Zurückziehen der Abstreifer 14 nach oben auch wieder auf die Wickelebene zurück.

Sowohl zu Beginn des Wickelns der ersten Gruppe konzentrischer Spulen als auch am Anfang des Wickelns der folgenden, über Zwischenpolverbindungen zusammenhängenden Spulengruppen muß der Wickeldraht mittels eines Greifers 18 auf oder dicht neben der Wickelebene festgeklemmt gehalten werden, bis die Wickeldüse 12 einige Drahtwindungen auf der untersten Schablonenstufe erzeugt hat, deren Reibung an der Oberfläche der Schablone 10 ausreicht, um Draht aus der Wickeldüse 12 herausziehen zu können. Der Greifer 18 hat aber in bekannter Weise nicht nur die Funktion, jeweils zu Beginn eines Wickelvorgangs den Draht vorübergehend festzuhalten, sondern er dient auch zur Erzeugung bestimmter Längenabschnitte des Drahtes entsprechend den jeweils benötigten Längen für die verschiedenen Zwischenpolverbindungen und die äußeren Anschlußenden der Spulen. Er muß, nachdem durch die Absenkbewegung der Wickeldüse 12 und/oder der Abstreifer 14 der Wickeldraht in ihn eingeführt worden ist, entweder im zu einer Führungsöse geschlossenen, den Draht lose umgreifenden Zustand oder im geklemmten Zustand während bestimmter Bewegungen der Wickeldüse 12 und/oder der Schablone 10 stillstehen oder er muß selbst bestimmte Bewegungen ausführen, um z. B. eine bestimmte Drahtlänge aus der Wickeldüse 12 zu ziehen, bevor diese mit der nächsten Wickelbewegung beginnt oder der Draht abgeschnitten wird. In der Regel erfolgt das Herausziehen einer bestimmten Drahtlänge aus der Wickeldüse 12 bei halb geschlossenem, den Draht nur lose umgreifenden und führenden Greifer 18, indem dieser relativ zur Wickeldüse 12 und Schablone 10 eine Bewegung ausführt. Es kann aber auch z. B. bei stillstehendem, den Draht geklemmt haltendem Greifer 18 durch axiale und/oder Drehbewegung der Wickeldüse 12 eine bestimmte Drahtlänge herausgezogen werden. Um andererseits sehr kurze Zwischenpolverbindungen zu erhalten, ist es zweckmäßig, den Greifer 18 im den Draht fest geklemmt haltenden Zustand bei der Drehschaltbewegung des Aufnehmers 16 in dessen Drehrichtung mitzuführen.

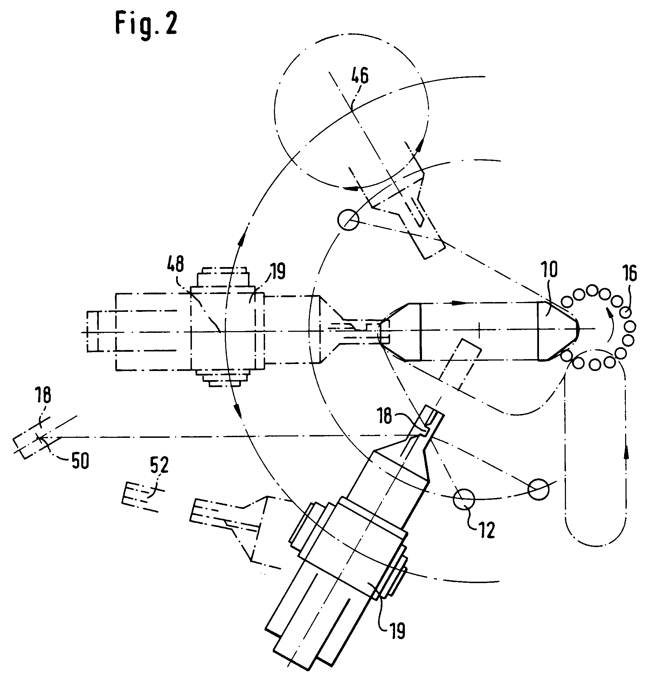

Bei der beispielhaft gezeigten Vorrichtung ist der Greifer 18 an einem insgesamt mit 19 bezeichneten Träger gelagert, und zwar an einem Schlitten 20, welcher mittels eines umschaltbaren elektromotorischen Antriebs 22 relativ zu einem Träger-Kopfteil 24 um eine horizontale Achse 26 kippbar und quer zu dieser längs einer Führung 28 verschieblich ist. Das Träger-Kopfteil 24 ist mittels eines weiteren elektromotorischen Antriebs 30 relativ zu einem Träger-Grundteil 32 um eine senkrechte Achse 34 drehbar, welche die Kippachse 26 im rechten Winkel schneidet. Der Träger 19 ist längs einer Führung 36 am Maschinenrahmen 38 verschieblich geführt, die sich halbkreisförmig im Bogen um denjenigen Teil der Schablone 10 erstreckt, welcher nicht mit dem Aufnehmer 16 in Eingriff zu bringen ist, wobei der Mittelpunkt des Bogens mit dem Drehzentrum der Wickeldüse 12 zusammenfällt. Die sich z. B. über 180° erstreckende bogenförmige Führung 36 gestattet es, daß gemäß Fig. 2 der Greifer 18 auf entgegengesetzten Seiten der Schablone 10 positioniert werden kann. Um den Träger 19 längs der bogenförmigen Führung 36 zu verfahren, erstreckt sich konzentrisch zu dieser ein halbkreisförmiger Zahnkranz 40, in den ein am Träger 19 gelagertes, durch einen steuerbaren Elektromotor 42 angetriebenes Ritzel 44 eingreift.

In der Draufsicht nach Fig. 2 ist der Träger 19 in ausgezogenen Linien rechts von der Grundstellung gezeigt, die auf der sich durch die Drehachsen des Aufnehmers 16 und der Wickeldüse 12 erstreckenden Ebene liegt. In diesem Bereich wird der Träger 19 positioniert, um mit dem Greifer 18 beim Anwickeln an die rechte Seite der Schablone 10 heranfahren zu können, wenn z. B. entgegen dem Uhrzeigersinn gewickelt und auch der Aufnehmer 16 entgegen dem Uhrzeigersinn weitergeschaltet wird.

Die entgegengesetzte, bei 46 angedeutete Stellung wäre beim Anwickeln einzunehmen, wenn die Spulen im Uhrzeigersinn gewickelt werden und der Aufnehmer 16 ebenfalls im Uhrzeigersinn weitergeschaltet wird.

Die bei 48 gestrichelt angedeutete Grundstellung des Trägers 19 mittig auf der Ebene durch die Drehachse der Wickeldüse 12 und die Drehachse des Aufnehmers 16 kann z. B. nach dem Wickeln der letzten Spulengruppe eingenommen werden, um dann durch Drehung um die Achse 34, z. B. bis in die bei 50 angedeutete Stellung des Greifers 18, noch eine bestimmte Länge Draht aus der Wickeldüse 12 zu ziehen, bevor der Draht am Greifer 18 derart abgeschnitten wird, daß das mit den zuvor gewickelten Spulen verbundene Drahtende herabfällt, während das zur Wickeldüse 12 führende Drahtende geklemmt gehalten wird.

In entsprechender Weise, wie soeben beschrieben, kann auch dann, wenn sich der Träger 19 in der in ausgezogenen Linien gezeigten rechten Stellung oder in der bei 46 angedeuteten Stellung befindet, durch Drehung des Greifers um die Drehachse 34 und ggf. zusätzlich durch Verfahren des Trägers 19 längs der bogenförmigen Führung 36 eine Zwischenpolverbindung bestimmter Länge erzeugt werden, wobei auch der Schlitten 20 längs der Führung 28 verfahren werden kann, wie bei 52 angedeutet.

Der Schlitten 20 nimmt während des Anwickelns einer Spule eine zum greiferseitigen Ende hin ansteigende, schräge Lage ein, in welcher sich der Greifer 18 im wesentlichen in der Wickelebene befindet, aber die Wickeldüse 12 radial weiter außen oberhalb des Schlittens 20 umlaufen kann. Anschließend wird der Schlitten 20 um die Achse 26 gekippt, so daß sich der Greifer 18 etwas unterhalb der Wickelebene befindet, allerdings nur soweit, daß beim Abwärtshub der Abstreifer 14 und der Wickeldüse 12 der Wickeldraht, der sich von der Wickeldüse 12, die an einer bestimmten Stelle ihrer Umlaufbahn angehalten worden ist, zur Schablone 10 erstreckt, in die Maulöffnung des Greifers 18 eingeführt wird, wie dies in Fig. 2 gezeigt ist. Da sich am Ende des ersten kurzen Abwärtshubs, der zusammen mit der Schablone 10 ausgeführt wird, die letzten Drahtwindungen noch auf der Schablone 10 befinden, kann jetzt durch Bewegung des Greifers 18 eine bestimmte Drahtlänge ausgezogen, der Draht dann abgeschnitten und das Drahtende an einer bestimmten Stelle abgelegt werden.

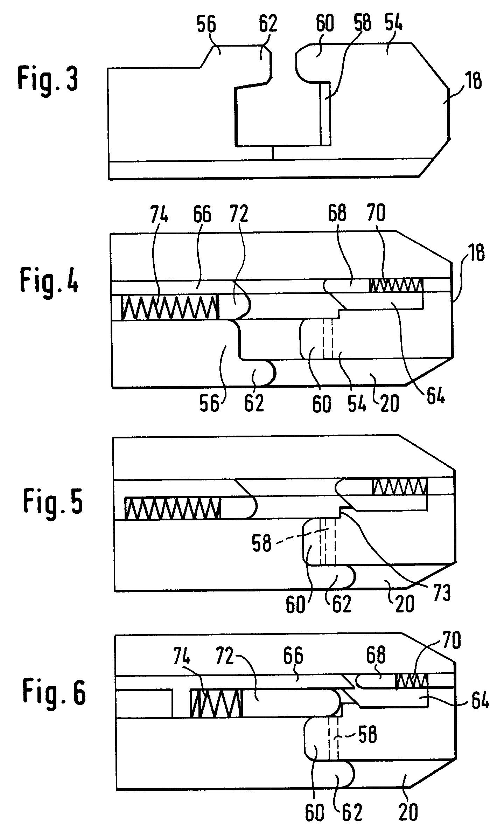

Der prinzipielle Aufbau des Greifers 18 mit Schneideinrichtung ist in den Fig. 3 bis 6 dargestellt. Er besteht aus einer feststehenden Klemmbacke 54 und einer beweglichen Klemmbacke 56. Die Klemmfläche wenigstens der einen Klemmbacke kann durch ein elastisches Material 58, wie z. B. Gummi oder Kunststoff gebildet sein. Oberhalb der Klemmfläche der Klemmbacke 54 ragt ein Vorsprung 60 zur beweglichen Klemmbacke 56 hin vor. Auch auf Seiten der beweglichen Klemmbacke 56 ragt oberhalb der Klemmfläche ein Vorsprung 62 zur feststehenden Klemmbacke 54 hin vor. Die beiden Vorsprünge 60 und 62 sind versetzt angeordnet, so daß sie aneinander vorbeibewegt werden, wenn die Klemmbacken 54, 56 aus der ganz geöffneten Stellung nach Fig. 3 und 4 in die Klemmstellung nach Fig. 6 gebracht werden, in welcher die Klemmflächen gegeneinander angedrückt sind. Zwischen der geöffneten Stellung nach Fig. 3 und 4 und der Klemmstellung nach Fig. 6 gibt es die in Fig. 5 gezeigte Zwischenstellung, in welcher sich die Vorsprünge 60 und 62 überlappen, aber die Klemmflächen noch einen Zwischenabstand haben. In dieser Relativstellung der Klemmbacken 60, 62 nach Fig. 5 bildet der Greifer 18 eine Öse, welche den Wickeldraht lose führt, um z. B. bei einer Vergrößerung des Abstands des Greifers 18 zur Wickeldüse 12 Draht aus dieser zu ziehen.

Seitlich neben den Klemmbacken 54, 56 sind zwei zusammenwirkende Schneidkanten 64, 66 angebracht. Im Beispielsfall ist die Schneidkante 64 fest, während die Schneidkante 66 bis über die Schneidkante 64 vorgeschoben werden kann.

Die bewegliche Schneidkante 66 wird zunächst während des Klemmvorgangs näher an die feststehende Schneidkante 64 herangeführt. Bei geklemmten Klemmbacken 54, 56 kann anschließend die bewegliche Schneidkante 66 mittels eines separaten Antriebs weiter bis in die in Fig. 6 gezeigte Stellung vorgeschoben werden. Dabei wird ein bis dahin über die feste Schneidkante 64 vorstehender Drahtabweiser 68 gegen die Kraft einer Rückstellfeder 70 zurückgedrängt. Gleichzeitig wird auch ein zusammen mit der beweglichen Schneidkante 66 vorgeschobener Drahtabweiser 72 durch Anstoßen an eine Anschlagfläche 73 an der Klemmbacke 54 gegen die Kraft einer Rückstellfeder 74 relativ zur Schneidkante 66 zurückgedrängt. Die Drahtabweiser 68, 72, die außer während des Schneidvorgangs unmittelbar neben den Schneidkanten 64, 66 weiter als diese zur jeweils anderen Klemmbacke hin vorstehen, verhindern, daß beim Einführen des Drahtes in den geöffneten Greifer nach Fig. 3 und 4 sowie in der losen Führungsstellung nach Fig. 5 die scharfen Schneidkanten 64, 66 den Wickeldraht oder seine Isolierung beschädigen. Außerdem wird dadurch, daß die Anschlagfläche 73 gegenüber der Klemmfläche, d. h. im Beispielsfall gegenüber der Oberfläche des elastischen Materials 58, versetzt ist und der Draht nach dem Abschneiden auch zwischen dem Drahtabweiser 72 und der Anschlagfläche 73 geklemmt wird und zwischen den beiden Klemmstellen stufenförmig abgewinkelt ist, eine sehr feste Klemmung erzielt. Man läßt deshalb nach dem Abschneiden zweckmäßigerweise die Schneidkanten in der Schneidposition nach Fig. 6, bis das Anwickeln der nächsten Spule beendet ist. Die Betätigung der Klemmbacken und der Schneidkanten erfolgt durch getrennte pneumatische Antriebe, die nicht im einzelnen gezeigt sind.

Die beschriebene Vorrichtung eignet sich, da sie eine sehr robuste Ausführung des Trägers 19, des Greifers 18 und der Schneideinrichtung gestattet und sehr fest klemmt, nicht nur für das Wickeln mit Einzeldrähten, sondern auch für das Wickeln mit Paralleldrähten. Weil der Greifer_18 mit der Schneideinrichtung 64, 66 vereinigt ist, wird der Draht nach dem Abschneiden unmittelbar an seinem Ende gehalten und dieses kann z. B. zwischen zwei Bolzen 76 oder in einer Klemme an einem mit dem Aufnehmer 16 verbundenen Spulenteller 78 abgelegt und somit genau positioniert werden, so daß es bei einem nachfolgenden Bearbeitungsvorgang wieder erfaßt werden kann. Schließlich können mit der neuen verfahrbaren kombinierten Schneid- und Längenzieheinrichtung Wickelaufgaben ausgeführt werden, die bisher nicht möglich waren, weil dabei entweder der Greifer oder die Schneideinrichtung nacheinander erst auf der einen und dann auf der entgegengesetzten Seite der Schablone aktiviert werden müssen.

## Patentansprüche

1. Vorrichtung zum Wickeln von Spulen oder Spulengruppen für elektrische Maschinen, bestehend aus einer Wickelschablone (10), einer relativ zu dieser in einer Wickelebene umlaufenden und in mehreren definierten Winkelstellungen ihrer Umlaufbahn anhaltbaren Wickeldüse (12), einem mit der Schablone (10) in Eingriff zu bringenden, achsparallele Schlitze aufweisenden Aufnehmer (16), einem relativ zur Schablone (10) axial verschieblichen Abstreifer (14) zum Überstreifen der Spulen von der Schablone in die Schlitze des Aufnehmers (16), einem durch steuerbare Antriebe (22, 30, 42) eines Trägers (19) relativ zur Schablone (10) axial und radial verfahrbaren, den Draht vor und nach dem Wickeln von Spulen oder Spulengruppen wahlweise lose führenden oder geklemmt haltenden Greifer (18), welcher in Achsrichtung gesehen im Bereich radial außerhalb des Aufnehmers (16) zwischen einer oder mehreren in der Anfangsphase der Wickelvorgänge eingenommenen Anwickelstellungen und nach Beendigung der Wickelvorgänge eingenommenen Greifstellungen, in welchen der Draht durch eine axiale Relativbewegung zwischen der Wickeldüse (12) und dem Greifer (18) in diesen einführbar ist, auf einer Bahn außerhalb der Wickelebene bewegbar ist, sowie einer Schneideinrichtung (64, 66) zum Abschneiden des Drahts zwischen der Schablone (10) und dem Greifer (18), **dadurch gekennzeichnet,** daß die Schneideinrichtung (64, 66) neben dem Greifer (18) an dessen Träger (19) gelagert und die aus dem Greifer (18) und der Schneideinrichtung (64, 66) bestehende Einheit durch eine steuerbare Bewegung des Trägers (19) von einer Stellung auf einer Seite der Schablone (10) zu einer Stellung auf der entgegengesetzten Seite der Schablone (10) verfahrbar ist.

2. Vorrichtung nach Anspruch 1, **dadurch gekennzeichnet,** daß der Träger (19) längs eines Kreisbogens um die Drehachse der Wickeldüse (12) verfahrbar ist.

3. Vorrichtung nach Anspruch 2, **dadurch gekennzeichnet,** daß der Greifer (18) an einem einen Teil des Trägers (19) bildenden Schlitten (20) montiert ist, welcher um eine sich parallel zur Drehachse der Wickeldüse (12) erstreckende Achse (34) drehbar gelagert und gesteuert drehbar ist.

4. Vorrichtung nach Anspruch 3,, **dadurch gekennzeichnet,** daß der Schlitten (20) um eine zu seiner Drehachse (34) senkrecht liegende Achse (26) gesteuert kippbar und quer zu dieser Achse (26) gesteuert verschiebbar ist.

5. Vorrichtung nach einem der Ansprüche 1 bis 4, **dadurch gekennzeichnet,** daß der Greifer (18) zwei Klemmbacken (54, 56) aufweist, welche einlaßseitig mit gegeneinander weisenden, aber versetzt angeordneten Vorsprüngen (60, 62) ausgebildet und in eine geöffnete Stellung, eine Zwischenstellung, in welcher sich die Vorsprünge (60, 62) überlappen und zusammen mit den Klemmflächen eine Führungsöffnung begrenzen, sowie in eine Klemmstellung bewegbar sind.

6. Vorrichtung nach Anspruch 5, **dadurch gekennzeichnet,** daß neben den Klemmbacken (54, 56) Schneidkanten (64, 66) angebracht sind, welche in der Klemmstellung aus einer unwirksamen, zurückgezogenen oder abgedeckten Lage in eine schneidend zusammenwirkende Stellung bewegbar sind.
